# EUROPEAN PATENT SPECIFICATION

(11) **EP 4 307 276 B1**
(45) Date of publication and mention of the grant of the patent: **30.09.2026**
(21) Application number: 22184109.1
(22) Date of filing: 11.07.2022
(51) Int. Cl.: H04W 4/50, G08G 5/26, G08G 5/22, G08G 5/56

(54) **AIR TRAFFIC CONTROL SYSTEM**
LUFTVERKEHRSSTEUERUNGSSYSTEM
SYSTÈME DE CONTRÔLE DE LA CIRCULATION AÉRIENNE

(43) Date of publication of application: 17.01.2024
(73) Proprietor: Rohde & Schwarz GmbH & Co. KG, 81671 München (DE)
(72) Inventor: Lautenbacher, Markus, 82487 Oberammergau (DE); Kilpert, Jörg, 82178 Puchheim (DE)
(74) Representative: Novagraaf Group

(56) References cited:
- EP-A1- 3 905 639
- EP-A2- 3 444 791
- US-A1- 2020 160 734

## Description

### TECHNICAL FIELD

The present invention relates to an air traffic control system.

### BACKGROUND OF THE INVENTION

Air traffic control (ATC) is a service provided by a ground-based air traffic control system that directs civilian or military aircraft on the ground and through a given section of controlled airspace and who can provide advisory services to aircraft in non-controlled airspace. For this purpose, an ATC system is equipped with a complex information processing system that processes and controls various air traffic control data in order to provide the smooth operation of civilian or military aircrafts. The handling of this ATC system is performed by air traffic control specialists (ATCS). The ATC system provides the ATCS amongst others with identification and display of aircraft, presentation and distribution of flight plan data, flight safety warnings, and handling controller requirements.

ATCSs monitor the location of aircrafts in their assigned airspace typically by radar and communicate with the aircraft's pilots by radio. The ATCS' operator position that is located typically in an airport tower is denoted as controller working position or shortly CWP. The CWP that provides a human-machine interface to ATCSs at the air traffic service units (ATSU) typically comprises a specific workstation along with one or more screens. Such an air traffic controller working position is disclosed for example in KR 101 407 862 B1. An ATC system is for example the CERTIUM system that is developed and distributed in various configurations by Rohde & Schwarz, Munich.

The ATCSs at their controller working position in the tower have a 24 hours day, 7 days a week in order to provide air traffic service around the clock.

CWP and voice communication systems (VCS) typically load their device configurations from a central management database within the ATC system. If this central management database is not available for whatever reason, ATC systems are typically equipped with a redundant database in order to maintain the operation of a CWP and/or a VCS also in this situation.

EP 3 905 639 A1 discloses a communication system for air traffic control comprising a cloud-based server structure, a controller working position and a radio ground station, where the controller working position and the radio ground station are connected to the cloud-based server by means of an internet protocol infrastructure. US 2020/160734 A1 describes a method to provide air traffic control and communication to a passenger drone. The passenger drone is set to receive emergency instructions from an air traffic control system, to which it communicates through a wireless network. The emergency instructions are stored in a memory. Whenever a communication disruption with the air traffic control system is detected, a switchover procedure is implemented, where communication is attempted to be re-established using a backup wireless network. If the switchover procedure fails, the stored emergency instructions are implemented. EP 3 444 791 A2 discloses a system and method for an air traffic control to automatically generate optimized routes for aircrafts based on a set of parameters and a set of criteria. The generated routes can be transmitted to the aircraft or a controller working positions for their visualization.

### SUMMARY OF THE INVENTION

The object underlying the present invention is to provide an air traffic control system with an even improved failsafe operation mode.

The present invention provides an air traffic control system having the features of claim 1.

Accordingly, an air traffic control -ATC- system is provided. The ATC system comprising:
- at least one controller working position -CWP- and/or at least one ATC communication gateway, wherein the CWP and/or communication gateway are configured to operate based on specific device configuration data,
- at least one central database which is coupled to each of the CWPs and/or ATC communication gateways, wherein the central database is configured to store the specific device configuration data of the CWPs and/or ATC communication gateways and wherein for normal operation (i. e. no system failure), the CWPs and/or ATC communication gateways are retrieving their specific device configuration data from the central database,
- at least one local backup device, each associated with and comprised in at least one of the CWPs and/or ATC communication gateways, wherein each of the local backup devices includes a memory comprising backup information of the specific device configuration data for the assigned CWP and ATC communication gateway, respectively, and wherein each of the local backup devices is configured to upload the backup information stored in its memory to the assigned CWP and ATC communication gateway, respectively, in case the CWP and ATC communication gateway, respectively, is disconnected from the central database.

The present invention presents a solution for a scenario in which a complete system failure occurs, for example in case of a total power failure (also of the backup emergency power supply), the communication network or the like, where a connection to the system's central management database is no more possible. The idea of the present invention is to be able even in this scenario of a complete system failure to maintain at least a basic operation of the components of the ATC system, such as the CWPs or the ATC communication gateways, by providing a fallback to a local configuration of the relevant components of the ATC system. Thus, a failsafe local configuration of the components of an ATC system is provided in case of a complete system failure.

In particular, in case of a total failure of the central management database system, all relevant components of the ATC system that are configured to first take their start-up configuration from the central database fall back to a failsafe static local start-up configuration. The system administrator performs the configuration of all relevant components of the ATC system as usual in the central management database system. At the time the system administrator has completed the configuration of the system, the system administrator triggers an action in the central management database system to push the final configuration of the system to all connected components of the ATC system and installs this final configuration in these components as the static local start-up configuration. This configuration file may be used in case of a total failure of the database system as the failsafe local configuration that will still ensure at least minimal operability of the relevant components of the ATC system.

With the solution of this invention, the affected components of the ATC system will boot with a default configuration and allow the controller of the affected component to perform a basic operation even in case the central database is down completely or not accessible.

The CWPs and/or ATC communication gateways are retrieving only the information assign to their device.

The backup information may comprise the complete configuration data or preferably only the relevant parts of the configuration data.

The disconnection of the CWPs and ATC communication gateways, respectively, from the central database means a complete system failure or at least the unavailability of the database for retrieving the configuration data.

Advantageous configurations and developments emerge from the further dependent claims and from the description with reference to the figures of the drawings.

In a preferable configuration, the local backup device comprises a detection unit. The detection unit which is configured to detect a disconnection status which denotes a status where the assigned CWP and ATC communication gateways, respectively, is/are disconnected from the central database. The detection unit may be a time-domain reflectometer, a signal-sensing device, or a simple ohmmeter. The function of the detection unit can also be performed using a timer in conjunction with a system status request sent to the central server. If, for example, for a predefined time no system status response is received from the server, then the detection unit may assume that there is a system failure other examples for detecting a disconnection or failure may also be possible.

According to a further embodiment, the local backup device further comprises a backup controller. The backup controller is configured to control the upload process of the stored backup information to the assigned CWP and ATC communication gateway, respectively, in case the detection unit has detected a disconnection from the central database. The backup controller is preferably part of the controller of the CWP and ATC communication gateway.

In particular, the backup controller is further configured to resume to a normal operation mode for predefined conditions or circumstances. The predefined conditions or circumstances may be a specific user input, a manual or automatic system restart, the renewed availability of the central database, a specific command from a central server of the ATC system, etc. Resuming to a normal operation mode means that the assigned CWP and ATC communication gateway, respectively, retrieve (i.e. by loading or downloading) their specific device configuration data from the central database again. Specific device configuration data may include system and/or administrator settings and user specific settings. User specific settings may include the volume, screen layout, screen brightness, color, display, etc.

According to another embodiment, the local backup device is configured to upload the backup information automatically in case its assigned CWP and ATC communication gateway, respectively, is disconnected from the central database. In case of a failure the emergency configuration will be loaded automatically and a local mode (backup mode or emergency mode) will be activated. In another embodiment, the uploading of the backup information may be executed only upon a user request and an explicit user input.

According to a particular preferred configuration, the local backup device is configured to generate automatically a message that comprises information in connection with the disconnection event and/or log information such as the date and time of the failure of the assigned CWP and ATC communication gateway, respectively. This way, an ATC operator, system administrator and/or the ATC tower staff is informed of the system failure of the assigned CWP and ATC communication gateway, respectively. This message can be a request to the ATC operator or system administrator or an automated configuration. Preferably, the message comprises information with regard to the current status of the CWP and/or ATC communication gateway concerned. The message may also be an emergency message. Preferably, the message is transmitted over the air (OTA), e.g. via radio.

According to a preferred embodiment, at least one of the local backup devices and/or memories is incorporated within its assigned CWP and/or within its assigned ATC communication gateway. Alternatively, the backup device may also be a separate device outside the assigned CWP and/or within its assigned gateway.

The ATC communication gateway denotes a gateway for air-to-ground communication and/or ground-to-ground communication. This functionality may be implemented in a separate device or, in a preferred embodiment, within a CWP.

In an additional or alternative embodiment, the ATC system further comprises at least one IP interface. The CWP and/or ATC communication gateways may be connected via the IP interface to a central ATC server that for example controls the operation of the ATC system. The IP interface - amongst others - serves for externally controlling the operation of the CWPs and/or ATC communication gateways.

The ATC system further comprises a central ATC server connected to the CWP and/or to the ATC communication gateways via the IP interface.

In an additional or alternative embodiment, at least one of the local backup devices and/or memories are incorporated within the central ATC server.

According to a further embodiment, the backup information provided by the local backup devices comprises device configuration data of the assigned CWP and ATC communication gateway, respectively, as well as network configuration information. Network configuration information includes for example IP addresses, static IPS information (IPS = intrusion prevention system), VLAN information (virtual local network).

In a particular preferred embodiment, with each new configuration the backup information in the backup device or its memory is updated accordingly.

In a preferable configuration, the communication of the ATC system is based on an IP infrastructure.

In a preferred, but not necessary embodiment, the ATC-system further comprises a LAN network and/or WAN network for coupling the components of the ATC-system to the central database and/or to the central server. The components of the ATC-system may be the central ATC server, one or more CWPs, the ATC communication gateways, memories, local backup devices and others such as security devices, energy supply, lighting, etc.

Where appropriate, the above-mentioned configurations and developments can be combined in any manner. Further possible configurations, developments and implementations of the invention also include combinations, which are not explicitly mentioned, of features of the invention that have been described previously or are described in the following with reference to the embodiments. In particular, in this case, a person skilled in the art will also add individual aspects as improvements or supplements to the basic form of the present invention.

### CONTENT OF THE DRAWINGS

The present invention is described in greater detail in the following on the basis of the embodiments shown in the schematic figures of the drawings, in which:
- Fig. 1: shows a block diagram of an air traffic control system according to an aspect of the present invention;
- Fig. 2: shows a block diagram of a CWP for an ATC system according to a further aspect of the present invention;
- Fig. 3: shows a block diagram of an air traffic control system according to another aspect of the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings.

In the drawings, like, functionally equivalent and identically operating elements, features and components are provided with like reference signs in each case, unless stated otherwise.

### DESCRIPTION OF EMBODIMENTS

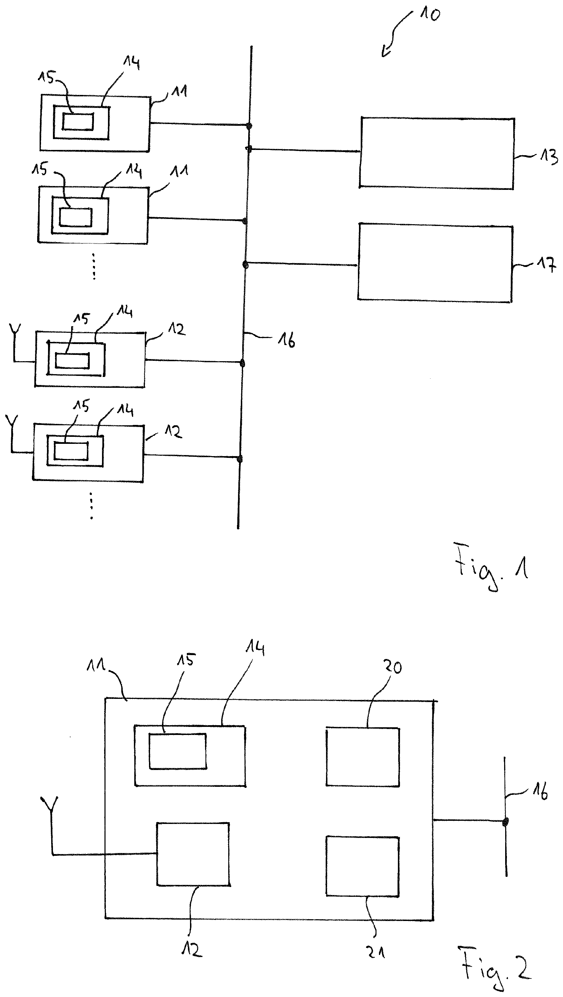

Fig. 1 shows a block diagram of an air traffic control (ATC) system according to an aspect of the present invention.

The ATC-system which is denoted by reference numeral 10 is at least partially located in a tower building of an airport (not shown in Fig. 1). The ATC-system 10 comprises in this example a plurality of controller working positions (CWP) 11, a plurality of ATC communication gateways 12, at least one central database 13, 13r, a plurality of local backup devices 14 and a communication network 16.

The central database 13 comprises a dedicated memory unit for storing the device configuration data of the CWPs 11 and/or ATC communication gateways 12. The ATC system 10 further comprises a redundant database 17 which is identical or at least similar to the central database 13 and which serves for storing a backup of the device configuration data stored in the central database 13.

The CWPs 11 and communication gateways 12 are configured to operate based on the device configuration data stored in one of the databases 13, 17. In normal operation, the CWPs 11 and the communication gateways 12 are retrieving their device configuration data from the central database 13 (or the redundant database 17) to which they are coupled to via the communication network 16. The communication network 16 is for example a LAN or WLAN network.

According to the invention, each of the CWPs 11 and ATC communication gateways 12 comprises a local backup device 14. Each of the local backup devices 14 within the CWPs 11 and ATC communication gateways 12 comprises a local memory 15. This local memory 15 serves for storing backup information of the specific device configuration data for its assigned CWP 11 and ATC communication gateway 12, respectively. The backup information does not necessarily comprise the full extent of the device configuration data which is typically provided by the central database 13, 17. Instead, the local backup device 14 preferably contains only basic configuration information sufficient to operate the assigned CWPs 11 and ATC communication gateways 12, respectively, in an emergency mode.

Hereinafter, the modes of operation of the ATC system 10 according to the present invention are shortly described:
In normal operation, the CWPs 11 and ATC communication gateways 12 fetch their device configuration data necessary for their operation from the central database 13, or if this is for example temporarily not accessible, from the redundant database 17.

In case of a system breakdown which is caused for whatever reasons and where the central database 13 as well as redundant database 17 are no longer accessible, the CWPs 11 and ATC communication gateways 12 are switching to a backup mode. In this backup mode, the CWPs 11 and ATC communication gateways 12 are retrieving their configuration information from a local backup device 14 within each of the CWPs 11 and ATC communication gateways 12, respectively.

Fig. 2 shows a block diagram of a CWP for an ATC system according to a further aspect of the present invention.

In the example of Fig. 2, the CWP 11 includes the ATC communication gateway 12 or at least its functionality. The ATC communication gateway 12 may be a radio device.

The local backup device 14 comprises a detection unit 20 that is configured to detect a disconnection status of the CWP 11 and/or the ATC communication gateway 12 to the database 13 or redundant database 17. The local backup device 14 further comprises a backup controller 21 which is configured to control the upload process of the stored backup information to the assigned CWP 11 and ATC communication gateway 12, respectively, in case the detection unit 20 has detected a disconnection from the central database 13, 17.

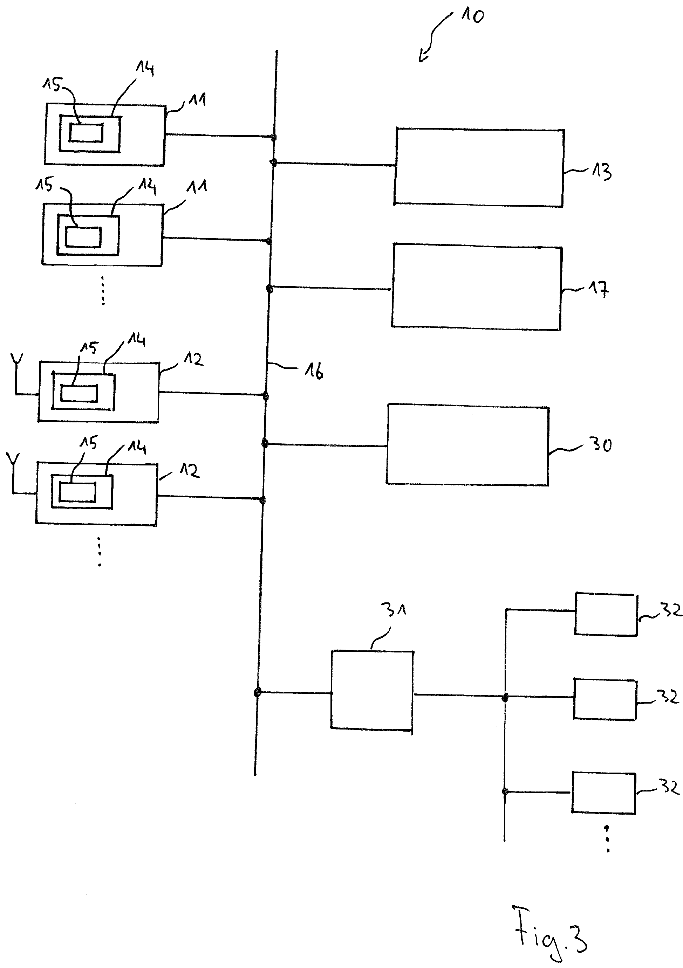

Fig. 3 shows a block diagram of an air traffic control system according to a further aspect of the present invention.

In difference to the embodiment example in Fig. 1, the ATC-system 10 comprises a central server 30 which comprises a processing unit and which is configured to provide centralized control of the operation of all CWPs 11 and ATC communication gateways 12 of the ATC system 10. The central server 30 is preferably wirelessly or wired coupled to the programmable control units (not shown in Fig. 3) of the CWPs 11 and ATC communication gateways 12.

The ATC system 10 further comprises an IP interface 31 for connecting the CWPs 11 and/or ATC communication gateways 12 to external devices 32, such as an external database, an external server and the like

The invention is not limited to physical devices or units implemented in non-programmable hardware, but can also be applied in programmable devices or units able to perform the desired device functions by operating in accordance with suitable program code. Furthermore, the devices may be distributed physically over a number of apparatuses and instruments, while functionally operating as a single device. Devices functionally forming separate devices may be integrated in a single physical device. Those skilled in the art will recognize that the boundaries between logic or functional blocks are merely illustrative and that alternative embodiments may merge logic or functional blocks or impose an alternate decomposition of functionality upon various logic or functional blocks.

In the description, any reference signs shall not be construed as limiting the claim. The word "comprising" does not exclude the presence of other elements or steps then those listed in a claim. Furthermore, the terms "a" or "an", as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same applies for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

### List of used reference symbols

- 10: air traffic control (ATC) system
- 11: controller working position, CWP
- 12: ATC communication gateway
- 13: central database
- 14: backup device
- 15: local memory
- 16: communication network
- 17: redundant database
- 20: detection unit
- 21: backup controller

- 30: central server
- 31: IP interface
- 32: external devices

## Claims

1. An air traffic control -ATC- system (10), the ATC system (10) comprising:
at least one controller working position -CWP- (11) and/or at least one ATC communication gateway (12),
- wherein the CWP (11) and communication gateway (12) are configured to operate based on specific device configuration data,
at least one central database (13) which is coupled to each of the CWPs (11) and ATC communication gateways (12),
- wherein the central database (13) is configured to store the specific device configuration data of the CWPs (11) and ATC communication gateways (12) and
- wherein for operation, the CWPs (11) and ATC communication gateways (12) are retrieving their specific device configuration data from the central database (13),
at least one local backup device (14), each associated with and comprised in at least one of the CWPs (11) and ATC communication gateways (12),
- wherein each of the local backup devices (14) includes a memory (15) comprising backup information of the specific device configuration data for the assigned CWP (11) and ATC communication gateway (12), respectively, and
- wherein each of the local backup devices (14) is configured to upload the backup information stored in its memory (15) to the assigned CWP (11) and ATC communication gateway (12), respectively, in case the CWP (11) and ATC communication gateway (12), respectively, is disconnected from the central database (13).

2. The ATC-system according to claim 1,
wherein the local backup device (14) comprises a detection unit (20) which is configured to detect a disconnection status.

3. The ATC-system according to claim 2,
wherein the local backup device (14) further comprises a backup controller (21) which is configured to control the upload process of the stored backup information to the assigned CWP and ATC communication gateway, respectively, in case the detection unit (20) has detected a disconnection from the central database (13).

4. The ATC-system according to claim 3,
wherein the backup controller (21) is further configured to resume to a normal operation mode where the assigned CWP (11) and ATC communication gateway (12), respectively, retrieves their specific device configuration data from the central database (13) for predefined conditions.

5. The ATC-system according to any of the preceding claims, wherein the local backup device (14) is configured to upload the backup information automatically in case its assigned CWP (11) and ATC communication gateway (12), respectively, is disconnected from the central database (13).

6. The ATC-system according to any of the preceding claims, wherein the local backup device (14) is configured to generate automatically a message which comprises information in connection with the disconnection event and/or log information of the assigned CWP (11) and ATC communication gateway (12), respectively.

7. The ATC-system according to any of the preceding claims, wherein at least one of the local backup devices (14) and/or memories (15) is incorporated within its assigned CWP (11) and/or within its assigned communication gateway (12).

8. The ATC-system according to any of the preceding claims, wherein at least one of the ATC communication gateways (12) is included in a CWP (11).

9. The ATC-system according to any of the preceding claims, further comprising at least one IP interface for externally controlling the operation of the CWPs (11) and/or ATC communication gateways (12).

10. The ATC-system according to claim 9,
further comprising a central ATC server connected to the CWPs (11) and/or to the ATC communication gateways (12) via the IP interface.

11. The ATC system according to claim 10, wherein at least one of the local backup devices and/or memories (15) are incorporated within the central ATC server.

12. The ATC-system according to any of the preceding claims, wherein the backup information comprises device configuration data as well as network configuration information.

13. The ATC-system according to any of the preceding claims, wherein with each new configuration the backup information is updated accordingly.

14. The ATC-system according to any of the preceding claims, wherein the communication is based on an IP infrastructure.

15. The ATC-system according to any of the preceding claims, further comprising a LAN network and/or WAN network for coupling the components of the ATC-system (10) to the central database.

## Patentansprüche

1. Flugsicherungssystem -ATC-System- (10), das ATC-System (10) umfassend:
mindestens eine Lotsenarbeitsposition -CWP-Arbeitsposition- (11) und/oder mindestens ein ATC-Kommunikationsgateway (12),
- wobei die CWP (11) und das Kommunikationsgateway (12) konfiguriert sind, um basierend auf spezifischen Vorrichtungskonfigurationsdaten in Betrieb zu sein,
mindestens eine zentrale Datenbank (13), die an jede/s der CWPs (11) und der ATC-Kommunikationsgateways (12) gekoppelt ist,
- wobei die zentrale Datenbank (13) konfiguriert ist, um die spezifischen Vorrichtungskonfigurationsdaten der CWPs (11) und der ATC-Kommunikationsgateways (12) zu speichern, und
- wobei für den Betrieb die CWPs (11) und ATC-Kommunikationsgateways (12) ihre spezifischen Vorrichtungskonfigurationsdaten aus der zentralen Datenbank (13) abrufen,
mindestens eine lokale Backup-Vorrichtung (14), die jeweils mindestens einer/einem der CWPs (11) und der ATC-Kommunikationsgateways (12) zugeordnet und darin umfasst ist,
- wobei jede der lokalen Backup-Vorrichtungen (14) einen Speicher (15) einschließt, umfassend Backup-Informationen der spezifischen Vorrichtungskonfigurationsdaten für die zugewiesene CWP (11) beziehungsweise das zugewiesene ATC-Kommunikationsgateway (12), und
- wobei jede der lokalen Backup-Vorrichtungen (14) konfiguriert ist, um die in ihrem Speicher (15) gespeicherten Backup-Informationen auf die zugewiesene CWP (11) beziehungsweise das zugewiesene ATC-Kommunikationsgateway (12) hochzuladen, falls die CWP (11) beziehungsweise das ATC-Kommunikationsgateway (12) von der zentralen Datenbank (13) getrennt ist.

2. ATC-System nach Anspruch 1,
wobei die lokale Backup-Vorrichtung (14) eine Erfassungseinheit (20) umfasst, die konfiguriert ist, um einen Trennungszustand zu erfassen.

3. ATC-System nach Anspruch 2,
wobei die lokale Backup-Vorrichtung (14) ferner einen Backup-Regler (21) umfasst, der konfiguriert ist, um den Hochladeprozess der gespeicherten Backup-Informationen auf die zugewiesene CWP beziehungsweise das zugewiesene ATC-Kommunikationsgateway zu regeln, falls die Erfassungseinheit (20) eine Trennung von der zentralen Datenbank (13) erfasst hat.

4. ATC-System nach Anspruch 3,
wobei der Backup-Regler (21) ferner konfiguriert ist, um zu einem normalen Betriebsmodus zurückzukehren, in dem die zugewiesene CWP (11) beziehungsweise das zugewiesene ATC-Kommunikationsgateway (12) für vordefinierte Bedingungen ihre/seine spezifischen Vorrichtungskonfigurationsdaten aus der zentralen Datenbank (13) abruft.

5. ATC-System nach einem der vorstehenden Ansprüche,
wobei die lokale Backup-Vorrichtung (14) konfiguriert ist, um die Backup-Informationen automatisch hochzuladen, falls ihre zugewiesene CWP (11) beziehungsweise ihr zugewiesenes ATC-Kommunikationsgateway (12) von der zentralen Datenbank (13) getrennt ist.

6. ATC-System nach einem der vorstehenden Ansprüche,
wobei die lokale Backup-Vorrichtung (14) konfiguriert ist, um automatisch eine Nachricht zu erzeugen, die Informationen in Verbindung mit dem Trennungsereignis und/oder Protokollinformationen der zugewiesenen CWP (11) beziehungsweise des zugewiesenen ATC-Kommunikationsgateways (12) umfasst.

7. ATC-System nach einem der vorstehenden Ansprüche,
wobei mindestens eine der lokalen Backup-Vorrichtungen (14) und/oder der Speicher (15) in ihre/seine zugewiesene CWP (11) und/oder in ihr/sein zugewiesenes Kommunikationsgateway (12) integriert ist.

8. ATC-System nach einem der vorstehenden Ansprüche,
wobei mindestens eines der ATC-Kommunikationsgateways (12) in einer CWP (11) eingeschlossen ist.

9. ATC-System nach einem der vorstehenden Ansprüche,
ferner umfassend mindestens eine IP-Schnittstelle zum externen Regeln des Betriebs der CWPs (11) und/oder der ATC-Kommunikationsgateways (12).

10. ATC-System nach Anspruch 9,
ferner umfassend einen zentralen ATC-Server, der über die IP-Schnittstelle mit den CWPs (11) und/oder mit den ATC-Kommunikationsgateways (12) verbunden ist.

11. ATC-System nach Anspruch 10,
wobei mindestens eine(r) der lokalen Backup-Vorrichtungen und/oder der Speicher (15) in den zentralen ATC-Server integriert sind.

12. ATC-System nach einem der vorstehenden Ansprüche,
wobei die Backup-Informationen Vorrichtungskonfigurationsdaten sowie Netzwerkkonfigurationsinformationen umfassen.

13. ATC-System nach einem der vorstehenden Ansprüche,
wobei die Backup-Informationen mit jeder neuen Konfiguration entsprechend aktualisiert werden.

14. ATC-System nach einem der vorstehenden Ansprüche,
wobei die Kommunikation auf einer IP-Infrastruktur basiert.

15. ATC-System nach einem der vorstehenden Ansprüche,
ferner umfassend ein LAN-Netzwerk und/oder WAN-Netzwerk zum Koppeln der Komponenten des ATC-Systems (10) mit der zentralen Datenbank.

## Revendications

1. Système de contrôle du trafic aérien -ATC- (10), le système ATC (10) comprenant :
au moins un poste de travail de contrôleur -CWP- (11) et/ou au moins une passerelle de communication ATC (12),
- dans lequel le CWP (11) et la passerelle de communication (12) sont configurés pour fonctionner en fonction de données de configuration de dispositif spécifiques,
au moins une base de données centrale (13) qui est couplée à chacun des CWP (11) et passerelles de communication ATC (12),
- dans lequel la base de données centrale (13) est configurée pour stocker les données de configuration de dispositif spécifiques des CWP (11) et passerelles de communication ATC (12) et
- dans lequel, pour le fonctionnement, les CWP (11) et passerelles de communication ATC (12) récupèrent leurs données de configuration de dispositif spécifiques à partir de la base de données centrale (13),
au moins un dispositif de sauvegarde local (14), chacun associé à et compris dans au moins l'un des CWP (11) et passerelles de communication ATC (12),
- dans lequel chacun des dispositifs de sauvegarde locaux (14) comprend une mémoire (15) comprenant des informations de sauvegarde des données de configuration de dispositif spécifiques pour le CWP (11) attribué et la passerelle de communication ATC (12), respectivement, et
- dans lequel chacun des dispositifs de sauvegarde locaux (14) est configuré pour télécharger les informations de sauvegarde stockées dans sa mémoire (15) vers le CWP attribué (11) et la passerelle de communication ATC (12), respectivement, dans le cas où le CWP (11) et la passerelle de communication ATC (12), respectivement, est déconnecté(e) de la base de données centrale (13).

2. Système ATC selon la revendication 1,
dans lequel le dispositif de sauvegarde local (14) comprend une unité de détection (20) qui est configurée pour détecter un état de déconnexion.

3. Système ATC selon la revendication 2,
dans lequel le dispositif de sauvegarde local (14) comprend en outre un dispositif de commande de sauvegarde (21) qui est configuré pour commander le processus de téléchargement des informations de sauvegarde stockées vers le CWP attribué et la passerelle de communication ATC, respectivement, dans le cas où l'unité de détection (20) a détecté une déconnexion de la base de données centrale (13).

4. Système ATC selon la revendication 3,
dans lequel le contrôleur de sauvegarde (21) est en outre configuré pour reprendre un mode de fonctionnement normal où le CWP (11) attribué et la passerelle de communication ATC (12) attribuée, respectivement, récupèrent leurs données de configuration de dispositif spécifiques à partir de la base de données centrale (13) pour des conditions prédéfinies.

5. Système ATC selon l'une quelconque des revendications précédentes,
dans lequel le dispositif de sauvegarde local (14) est configuré pour télécharger automatiquement les informations de sauvegarde au cas où son CWP (11) attribué et sa passerelle de communication ATC (12), respectivement, sont déconnectés de la base de données centrale (13).

6. Système ATC selon l'une quelconque des revendications précédentes,
dans lequel le dispositif de sauvegarde local (14) est configuré pour générer automatiquement un message qui comprend des informations en relation avec l'événement de déconnexion et/ou des informations de journal du CWP (11)attribué et de la passerelle de communication ATC (12), respectivement.

7. Système ATC selon l'une quelconque des revendications précédentes,
dans lequel au moins l'un des dispositifs de sauvegarde locaux (14) et/ou mémoires (15) est incorporé dans son CWP (11) attribué et/ou dans sa passerelle de communication (12) attribuée.

8. Système ATC selon l'une quelconque des revendications précédentes,
dans lequel au moins l'une des passerelles de communication ATC (12) est incluse dans un CWP (11).

9. Système ATC selon l'une quelconque des revendications précédentes,
comprenant en outre au moins une interface IP pour commander de manière externe le fonctionnement des CWP (11) et/ou passerelles de communication ATC (12).

10. Système ATC selon la revendication 9,
comprenant en outre un serveur ATC central connecté aux CWP (11) et/ou aux passerelles de communication ATC (12) par le biais de l'interface IP.

11. Système ATC selon la revendication 10, dans lequel au moins l'un des dispositifs et/ou mémoires de sauvegarde locaux (15) est incorporé(e) dans le serveur ATC central.

12. Système ATC selon l'une quelconque des revendications précédentes,
dans lequel les informations de sauvegarde comprennent des données de configuration de dispositif ainsi que des informations de configuration de réseau.

13. Système ATC selon l'une quelconque des revendications précédentes,
dans lequel à chaque nouvelle configuration, les informations de sauvegarde sont mises à jour en conséquence.

14. Système ATC selon l'une quelconque des revendications précédentes,
dans lequel la communication est basée sur une infrastructure IP.

15. Système ATC selon l'une quelconque des revendications précédentes,
comprenant en outre un réseau LAN et/ou un réseau WAN pour coupler les composants du système ATC (10) à la base de données centrale.
